# EUROPÄISCHE PATENTSCHRIFT

(11) **EP 3 443 551 B1**
(45) Veröffentlichungstag und Bekanntmachung des Hinweises auf die Patenterteilung: **03.04.2024**
(21) Anmeldenummer: 17720095.3
(22) Anmeldetag: 26.04.2017
(51) Int. Cl.: G08G 1/14, G06V 20/54

(54) **PARKPLATZÜBERWACHUNGSSYSTEM**
PARKING SPACE MONITORING SYSTEM
SYSTÈME DE SURVEILLANCE DE PARC DE STATIONNEMENT

(30) Priorität: 29.04.2016 DE 102016107995
(43) Veröffentlichungstag der Anmeldung: 20.02.2019
(73) Patentinhaber: Cleverciti Systems GmbH, 81379 München (DE)
(72) Erfinder: HOHENACKER, Thomas, 82319 Starnberg (DE)
(74) Vertreter: Manitz Finsterwald Patent- und Rechtsanwaltspartnerschaft mbB
(86) Internationale Anmeldenummer: PCT/EP2017/059955
(87) Internationale Veröffentlichungsnummer: WO 2017/186805

(56) Entgegenhaltungen:
- EP-A1- 2 535 886
- EP-A1- 2 535 886
- EP-A1- 2 535 886
- AU-A1- 1 836 701
- CN-U- 204 680 217
- CN-U- 204 680 217
- CN-U- 204 986 834
- CN-U- 204 986 834
- US-A1- 2010 208 065
- US-A1- 2010 208 065
- US-A1- 2014 176 349

## Beschreibung

Die vorliegende Erfindung betrifft ein Parkplatzüberwachungssystem zur Erfassung von freien und belegten Parkplatzbereichen in einer Parkplatzfläche.

Parkplatzüberwachungssysteme, welche mithilfe einer Anzeigeeinheit Fahrern von Fahrzeugen den Weg zu freien Parkplatzbereichen weisen, sind grundsätzlich bekannt. Üblicherweise handelt es sich bei den Anzeigeeinheiten dabei um plane Schilder, in die eine Zahlenanzeige eingelassen ist, die angibt, wie viele Parkplatzbereiche beispielsweise in einer Ebene eines Parkhauses noch frei sind. Nachteilig an solchen Anzeigeeinheiten ist, dass solche Anzeigeeinheiten auf die Anzeige vordefinierter Informationen beschränkt sind. Zudem muss eine Vielzahl solcher Anzeigeeinheiten verwendet werden, um einen Fahrer bis zu einem freien Parkplatzbereich zu leiten.

Ein Parkplatzüberwachungssystem gemäß dem Oberbegriff des Anspruchs 1 ist aus CN 204 680 217 U bekannt. Ein weiteres Parkplatzüberwachungssystem ist in EP 2 535 886 A1 beschrieben.

Es ist deshalb die der Erfindung zugrunde liegende Aufgabe, ein Parkplatzüberwachungssystem anzugeben, welches eine verbesserte und flexiblere Anzeige von Informationen gestattet.

Diese Aufgabe wird durch ein Parkplatzüberwachungssystem gemäß Anspruch 1 und insbesondere dadurch gelöst, dass die Anzeigefläche zumindest zwei Flächenbereiche umfasst, wobei die Flächenbereiche aneinander angrenzen und/oder aneinander anschließen, jeweils eine unterschiedliche räumliche Orientierung aufweisen und wobei die Anzeigeeinheit ausgebildet ist, in unterschiedlichen Flächenbereichen unterschiedliche Informationen anzuzeigen, insbesondere Hinweise auf unterschiedliche belegte und/oder freie Parkplatzbereiche. Die Anzeigefläche weist eine Vielzahl einzeln ansteuerbarer Pixel auf, wobei sich die Pixel auf die verschiedenen Flächenbereiche verteilen, und ist zumindest zum Teil zylindermantelförmig und/oder elliptisch und/oder in der Form der Mantelfläche eines Kegelstumpfs geformt.

Anders ausgedrückt ist die Anzeigefläche z.B. gekrümmt. Dies bedeutet, die Normalenvektoren der Flächenbereiche sind nicht parallel sondern schließen einen Winkel miteinander ein.

In unterschiedlichen Bereichen (d.h. in unterschiedlichen Flächenbereichen) der Anzeigeeinheit können erfindungsgemäß zur gleichen Zeit unterschiedliche Informationen angezeigt werden. Hierdurch wird es insbesondere gestattet, mit einer einzelnen Anzeigeeinheit auf mehrere verschiedene freie und/oder belegte Parkplatzbereiche hinzuweisen. Beispielsweise kann in einem ersten Flächenbereich auf einen ersten freien Parkplatzbereich hingewiesen werden, z.B. mittels einer grünen Farbe und/oder einem Pfeil in Richtung des freien Parkplatzbereichs. Ein zweiter Flächenbereich kann eine Belegungsinformation für einen zweiten Parkplatzbereich darstellen, z.B. bei einem belegten Parkplatzbereich mittels roter Farbe oder einem "X". In dieser Art und Weise können mittels einer einzelnen Anzeigeeinheit unterschiedliche Belegungszustände mehrerer unterschiedlicher Parkplatzbereiche dargestellt werden.

Erfindungsgemäß können einem Benutzer also verschiedene Informationen, z.B. über den Belegungsstatus verschiedener Parkplatzbereiche, kompakt und schnell erfassbar dargestellt werden. Aufgrund der gekrümmten Anzeigefläche ist es überdies möglich, einem Benutzer auch eine Richtung anzuzeigen, in der sich z.B. ein freier Parkplatzbereich befindet. In der Folge kann das erfindungsgemäße Parkplatzüberwachungssystem das Auffinden von freien Parkplatzbereichen und das Navigieren auf Parkplatzflächen stark vereinfachen.

Nachfolgend werden einzelne Aspekte des Parkplatzüberwachungssystems noch genauer erläutert.

Unter einer Mehrzahl verschiedener Fahrzeuge werden insbesondere zumindest zwei Fahrzeuge, bevorzugt zumindest vier, acht oder zehn Fahrzeuge verstanden. Die Anzeige von mehreren verschiedenen belegten und/oder freien Parkplatzbereichen dient der Anzeige von zumindest zwei, bevorzugt von zumindest vier, acht oder zehn Parkplatzbereichen.

Insbesondere kann es sich bei der Anzeigefläche um eine umlaufende Anzeigefläche handeln. Die Anzeigefläche kann folglich aus verschiedenen Richtungen gut erkennbar sein, sodass die auf der Anzeigefläche dargestellten Informationen nahezu aus jeder Richtung, das heißt von jedem Aufenthaltsort eines Fahrers gut zu erkennen sind. Auf der Anzeigefläche können Informationen über den Belegungsstatus mehrerer Parkplatzbereiche angezeigt werden.

Beispielsweise kann die Anzeigefläche wie eine Zylindermantelfläche geformt sein, wobei in diesem Fall die Flächenbereiche jeweils infinitesimal kleine Streifen sein können. Alternativ oder zusätzlich kann die Anzeigefläche auch kugelförmige oder halbkugelförmige Bereiche umfassen. Die Oberfläche der Anzeigefläche kann generell gesagt also konvex ausgebildet sein.

Es ist ein besonderer Vorteil einer solchen Anzeigefläche gegenüber flachen Anzeigen, dass der Fahrer die Anzeigefläche unabhängig von seiner Position sehen kann. Dies ist bei flachen Anzeigen nicht der Fall. Diese können nicht mehr abgelesen werden, sobald der Fahrer an der Anzeige vorbeigefahren ist. Ein weiterer Vorteil ist, dass auch Fahrer aus einer Gegenrichtung die Anzeigefläche erkennen können, sodass nur eine einzige Anzeigeeinheit für verschiedene Fahrtrichtungen ausreichen kann.

Die Anzeigefläche dient bevorzugt zum Leiten von Fahrzeugen zu freien Parkplatzbereichen. Hierzu können auf der Anzeigefläche beispielsweise sich bewegende Pfeile angezeigt werden, die auf freie Parkplatzbereiche hinweisen. Grundsätzlich kann die Anzeigefläche zur Darstellung beliebiger Informationen ausgebildet sein.

Das Erfassungssystem und die Anzeigeeinheit können miteinander kommunizieren. Dabei kann das Erfassungssystem der Anzeigeeinheit mitteilen, wo sich freie und/oder belegte Parkplatzbereiche befinden. Alternativ kann das Erfassungssystem der Anzeigeeinheit die anzuzeigenden Informationen übermitteln. Die Anzeigeeinheit stellt dann die von dem Erfassungssystem erhaltenen Informationen auf der Anzeigefläche dar und weist Fahrern auf diese Weise den Weg zu freien Parkplatzbereichen.

In dem Parkplatzüberwachungssystem kann zur Detektion von freien und belegten Parkplatzbereichen eine Auswerteeinheit vorgesehen sein. Die Auswerteeinheit kann beispielsweise in dem Erfassungssystem angeordnet sein.

Eine Parkplatzfläche bezeichnet einen Flächenbereich, in welchem sich mehrere Parkplatzbereiche befinden. Ein Parkplatzbereich kann auch als einzelner Stellplatz bezeichnet werden, das heißt ein Parkplatzbereich bietet üblicherweise einem Fahrzeug Platz. Die Parkplatzbereiche können unterschiedliche Größen aufweisen und so beispielsweise an die Größe von PKWs, LKWs oder Fahrrädern angepasst sein.

Die Parkplatzbereiche innerhalb der Parkplatzfläche können beispielsweise einmalig festgelegt werden. Alternativ können die Parkplatzbereiche auch anhand der Position von Fahrzeugen erkannt werden. Zusätzlich können auch Bereiche festgelegt oder ermittelt werden, in welchen ein Parken grundsätzlich unerwünscht oder verboten ist (Verbotszonen). Solche Bereiche können z.B. eine Straße oder eine Feuerwehranfahrtszone sein.

Bei den Fahrzeugen kann es sich um PKWs, LKWs, Motorräder, Fahrräder, Anhänger und dergleichen handeln. Ebenfalls ist es möglich, dass es sich bei den Fahrzeugen um Schiffe oder Flugzeuge handelt. In diesem Fall können die Parkplatzbereiche Anlegestellen eines Hafens oder Parkpositionen auf einem Flughafen sein.

Mittels der Anzeigeeinheit und insbesondere der auf der Anzeigefläche dargestellten Informationen können freie Parkplatzbereiche entlang einer Straße oder einer anderen Parkplatzfläche angezeigt werden. Auch z.B. Informationen über einen Unfall (Gefahrenhinweise), Geschwindigkeitsbegrenzungen, Preisinformationen über die Parkplatzbereiche oder über freie Parkplatzbereiche in der Umgebung können dargestellt werden. Aufgrund der verschieden ausgerichteten Flächenbereiche können die Informationen dabei besonders gut aus vielen Blickrichtungen erkannt werden, wodurch das Auffinden eines freien Parkplatzbereichs stark erleichtert wird. Beispielsweise kann ein Fahrer schon am Anfang einer Straße erkennen, ob in der Mitte der Straße ein freier Parkplatzbereich vorhanden ist. Auch z.B. auf großen Firmen- oder Kundenparkplätzen kann durch die Anzeigeeinheit für nahezu beliebige Positionen eines Fahrers kenntlich gemacht werden, wo sich freie Parkplatzbereiche befinden. Hierzu können auf der Anzeigefläche beispielsweise grüne Pfeile dargestellt werden, um freie Parkplatzbereiche zu signalisieren. Sind in einem bestimmten Gebiet der Parkplatzfläche keine Parkplatzbereiche frei, so kann dies mittels einer roten Farbe dargestellt werden. Insbesondere kann auch die Anzahl der jeweils freien Parkplatzbereiche angezeigt werden. Die auf der Anzeigefläche dargestellten Informationen können auch "wandern", d.h. sich auf der Anzeigefläche in Richtung von freien Parkplatzbereichen bewegen.

Die Anzeige von freien und/oder belegten Parkplatzbereichen kann in denjenigen Bereichen der Anzeigefläche erfolgen, die den jeweiligen Parkplatzbereichen entsprechen. Dies bedeutet, freie und/oder belegte Parkplatzbereiche können jeweils dort auf der Anzeigefläche angezeigt werden, wo die Anzeigefläche (bzw. ein Normalenvektor der Anzeigefläche) in Richtung der freien und/oder belegten Parkplatzbereichen zeigt.

Das Parkplatzüberwachungssystem kann auch mehrere Anzeigeeinheiten, die an unterschiedlichen Positionen angeordnet sind, und/oder mehrere Erfassungssysteme aufweisen.

Vorteilhafte Weiterbildungen der Erfindung sind der Beschreibung, den Zeichnungen sowie den Unteransprüchen zu entnehmen.

Gemäß der beanspruchten Erfindung weist die Anzeigefläche eine Vielzahl einzeln ansteuerbarer Pixel auf, wobei sich die Pixel auf die verschiedenen Flächenbereiche verteilen. Die Pixel können entweder alle eine gemeinsame Farbe darstellen oder zum Teil unterschiedliche Farben aufweisen. So kann z.B. ein Farbdisplay geschaffen werden, mit dem nahezu beliebige veränderbare Informationen dargestellt werden können. Die Anzeigefläche kann beispielsweise eine Vielzahl lichtemittierender Dioden (LEDs) oder ein LCD-Display umfassen. Werden selbstleuchtende Pixel verwendet, sind die dargestellten Informationen auch bei Nacht gut zu erkennen.

Gemäß der beanspruchten Erfindung ist die Anzeigefläche zumindest zum Teil zylindermantelförmig und/oder elliptisch und/oder eben und/oder in der Form der Mantelfläche eines Kegelstumpfs geformt. Hierunter ist zu verstehen, dass die Anzeigefläche einen Bereich aufweist, der z.B. nach Art der Fläche eines Zylindermantels oder der Mantelfläche eines Kegelstumpfs geformt ist. Dieser Bereich muss aber z.B. keine vollständige Zylindermantelfläche umfassen, sondern kann auch nur einen Teilabschnitt einer solchen Zylindermantelfläche umfassen. Die Anzeigefläche kann demnach verschiedene Formen aufweisen und insbesondere zumindest bereichsweise gekrümmt sein. Bevorzugt bildet die Anzeigefläche dabei eine durchgängige Fläche, sodass die von der Anzeigefläche angezeigten Informationen ohne sichtbare Brüche und dergleichen dargestellt werden können.

Bevorzugt ist die Anzeigefläche vollständig in der Form der Mantelfläche eines Kegelstumpfs ausgebildet.

Die Anzeigefläche kann auch mehrere ebene Flächen umfassen, die aneinander angrenzen und auf diese Weise in einer Draufsicht ein Polygon, insbesondere ein Hexagon oder ein Oktagon, oder einen Teil eines Polygons bilden. Durch eine Vielzahl solcher ebener Flächen kann eine runde oder kreisförmige Form der Anzeigefläche angenähert werden, wobei von Vorteil ist, dass das Polygon aus ebenen LED-Panels bzw. LED-Elementen gebildet werden kann.

Insbesondere kann die Anzeigefläche einen Winkel von etwa 180° überspannen und somit in der Draufsicht einen Halbkreis bilden. Der Halbkreis könnte auch in diesem Fall durch mehrere ebene Flächen der Anzeigefläche angenähert werden.

Gemäß einer weiteren vorteilhaften Ausführungsform ist die Anzeigefläche zumindest im Wesentlichen allseitig sichtbar. Dies bedeutet, die Anzeigefläche ist in der Ebene von jedem Punkt in der Nähe sichtbar. Hierzu kann die Anzeigefläche zumindest einen Winkel von 270°, bevorzugt von zumindest 350° oder 360° einschließen.

Gemäß einer weiteren vorteilhaften Ausführungsform erstreckt sich die Anzeigefläche zumindest zum Teil um ein Befestigungselement herum, wobei das Befestigungselement bevorzugt ein Mast und insbesondere ein Mast einer Straßenbeleuchtungseinrichtung ist. Durch die Anbringung an einem Mast einer Straßenbeleuchtungseinrichtung kann die Anzeigeeinheit erhöht über dem Boden angebracht werden, sodass sie schon aus großer Entfernung sichtbar ist. Ein Fahrer kann somit schon beim Einfahren in eine große Parkplatzfläche die Anzeigeeinheit sehen und sich anhand der auf der Anzeigefläche dargestellten Informationen orientieren. Durch die Anordnung um den Masten herum wird zudem sichergestellt, dass auf der Anzeigefläche dargestellte Informationen aus keiner Blickrichtung durch den Masten verdeckt werden. Aufgrund der so erzielten guten Sichtbarkeit der Anzeigeeinheit und der dargestellten Informationen kann die Anzahl der benötigten Anzeigeeinheiten gering ausfallen, sodass die Kosten für das Parkplatzüberwachungssystem gesenkt werden können.

Durch das Anbringen an dem Masten einer Straßenbeleuchtung kann die Anzeigeeinheit insbesondere über die Stromversorgung der Straßenbeleuchtung mit elektrischer Energie versorgt werden. Hierdurch kann der Aufwand zur Installation der Anzeigeeinheit stark gesenkt werden, da auf vorhandene Infrastruktur zurückgegriffen werden kann.

Das Befestigungselement kann im Boden verankert sein, insbesondere zwischen mehreren Parkplatzbereichen der Parkplatzfläche. Alternativ kann das Befestigungselement auch angrenzend an die Parkplatzfläche und/oder an einen Parkplatzbereich im Boden befestigt sein. Bevorzugt erstreckt sich das Befestigungselement zumindest bis zu der Anzeigeeinheit und/oder dem Erfassungssystem im Wesentlichen senkrecht (d.h. vertikal) aus dem Boden. Die Parkplatzfläche und/oder die Anzeigeeinheit und/oder das Erfassungssystem können insbesondere in einem Außenbereich (d.h. unter freiem Himmel) angeordnet sein.

Besonders bevorzugt sind sowohl die Anzeigeeinheit als auch das Erfassungssystem über den Parkplatzbereichen oder der Parkplatzfläche an Befestigungselementen angebracht. Auf diese Weise kann eine einfach erkennbare Verbindung zwischen den von dem Erfassungssystem überwachten Parkplatzbereichen und der Anzeigeeinheit geschaffen werden.

Gemäß einer Ausführungsform ist jeweils eine Anzeigeeinheit für zumindest vier Parkplatzbereiche vorgesehen. Dies bedeutet, auf der Anzeigefläche einer Anzeigeeinheit werden insbesondere Informationen über den Belegungszustand von zumindest vier Parkplatzbereichen gleichzeitig angezeigt. Die maximale Anzahl von Parkplatzbereichen, für die Informationen auf einer einzelnen Anzeigefläche dargestellt werden, kann je nach Art der Parkplatzfläche (z.B. Straße, Firmenparkplatz, etc.) variieren und beispielsweise 8, 10, 30 oder auch 50 Parkplatzbereiche betragen. Für eine noch größere Anzahl von Parkplatzbereichen können mehrere Anzeigeeinheiten an verschiedenen beabstandeten Masten von Straßenbeleuchtungseinheiten und dergleichen angebracht sein, z.B. entlang eines Straßenzuges.

Die Anzeigeeinheit kann beabstandet zu dem Erfassungssystem angeordnet sein. Insbesondere kann das Erfassungssystem im Vergleich zu der Anzeigeeinheit erhöht an demselben Befestigungselement (d.h. dem Masten) angebracht sein.

Gemäß einer weiteren vorteilhaften Ausführungsform weist die Anzeigeeinheit umlaufend einen Abstand zu dem Befestigungselement auf. Dies bedeutet, die Anzeigeeinheit kann beispielsweise ein zentrales Durchgangsloch für den Mast der Straßenbeleuchtungseinrichtung aufweisen, wobei die Anzeigeeinheit umlaufend einen Abstand zu dem Mast der Straßenbeleuchtungseinrichtung umfasst. Der Mast der Straßenbeleuchtungseinrichtung kann somit von der Anzeigeeinheit eingeschlossen sein. Insbesondere ist die Anzeigeeinheit symmetrisch und/oder rotationssymmetrisch um das Befestigungselement herum angeordnet. Aufgrund des

Abstands zu dem Befestigungselement kann die Anzeigeeinheit an unterschiedlichen Befestigungselementen (das heißt an Befestigungselementen mit unterschiedlichem Durchmesser oder unterschiedlicher Größe) befestigt werden, da Größenunterschiede durch den Abstand ausgeglichen werden können. Außerdem kann die Anzeigeeinheit aufgrund des Abstands zu dem Befestigungselement den Eindruck erwecken, über den Parkplatzbereichen zu "schweben".

Besonders bevorzugt ist die Anzeigeeinheit mittels einer größenverstellbaren Schelle an dem Befestigungselement angebracht, wobei zwischen der Schelle und der Anzeigeeinheit insbesondere ein oder mehrere längenverstellbare Abstandshalter vorgesehen sind. Durch die größenverstellbare Schelle kann die Anzeigeeinheit an nahezu beliebigen Masten in kurzer Zeit befestigt werden. Eine Anpassung an den Masten kann dabei durch die Größenverstellbarkeit der Schelle erfolgen. In Abhängigkeit des Durchmessers des Mastens können anschließend die Abstandshalter auf eine passende Länge eingestellt werden. Bei den Abstandshaltern kann es sich beispielsweise um Schrauben, Federn und dergleichen handeln.

Gemäß einer weiteren vorteilhaften Ausführungsform ist die Anzeigeeinheit ringförmig ausgebildet und umfasst an einer umlaufenden Außenseite die Anzeigefläche. Innerhalb der Anzeigefläche können die für die Anzeige der Informationen benötigten Komponenten, wie beispielsweise eine Energieversorgung oder eine Steuereinrichtung vorgesehen sein.

Bevorzugt können auf einer Oberseite der Anzeigeeinheit Solarzellen vorgesehen sein, die eine autarke Verwendung der Anzeigeeinheit ermöglichen. Insbesondere kann mit den Solarzellen tagsüber Energie erzeugt werden, die einen Betrieb der Anzeigeeinheit bei Nacht gestattet.

Die Ober- und die Unterseite der Anzeigeeinheit können jeweils scheibenförmig bzw. ringscheibenförmig und/oder eben geformt sein.

Gemäß einer weiteren vorteilhaften Ausführungsform umfasst die Anzeigeeinheit mehrere zusammenfügbare Segmente, welche mittels elektrischer Kontakte elektrisch miteinander verbindbar sind. Die Aufteilung der Anzeigeeinheit in Segmente kann eine einfache Montage gestatten. Dabei können die Segmente z.B. um einen Mast herum angeordnet und dann zusammengefügt werden. Beim Zusammenfügen kann automatisch eine elektrische Verbindung aller Segmente erfolgen. Bevorzugt umfasst jedes Segment einen Teil der Anzeigefläche. Insbesondere sind die Segmente äußerlich jeweils identisch und können sich beispielsweise jeweils über einen Winkelbereich von 90° oder 120° erstrecken. Alternativ kann die Anzeigeeinheit aus genau zwei Segmenten aufgebaut sein. Hierbei können z.B. zwei Segmente verwendet werden, die sich jeweils über einen Winkelbereich von 180° erstrecken. Ebenfalls ist es möglich, ein Segment mit einem Winkelbereich von 270° mit einem weiteren Segment zu vervollständigen, welches sich über 90° erstreckt.

Die Aufteilung der Anzeigeeinheit in mehrere Segmente bietet den Vorteil, dass einzelne Segmente separat ausgetauscht werden können. Zudem können Master-Segmente vorgesehen sein, die beispielsweise mit dem Erfassungssystem kommunizieren und die darzustellenden Informationen empfangen. Bei den übrigen Segmenten kann es sich um nebengeordnete Segmente handeln. In jeder Anzeigeeinheit muss bevorzugt zumindest ein Master-Segment vorhanden sein, um die Funktion der Anzeigeeinheit zu gewährleisten. Hierdurch ist es insbesondere möglich, beispielsweise neue Funktionen lediglich durch den Austausch des Master-Segments in die Anzeigeeinheit einzubringen, wobei die nebengeordneten Segmente ohne Änderungen weiter verwendet werden können. Zudem ergibt sich der Vorteil, dass beim Aufbau größerer Parkplatzüberwachungssysteme mit vielen Anzeigeeinheiten die einzelnen Segmente austauschbar sein können, sodass die Anzeigeeinheiten vor Ort baukastenartig aufgebaut werden können.

Gemäß einer besonders bevorzugten Ausführungsform sind die Flächenbereiche zumindest zum Teil in Richtung des Bodens geneigt. Durch die Neigung in Richtung des Bodens können auch von Positionen, die sich nahe an der Anzeigeeinheit befinden, die auf der Anzeigefläche dargestellten Informationen gut abgelesen werden. Auch kann eine Blendung durch Sonnenspiegelungen reduziert werden. Eine Neigung in Richtung des Bodens bedeutet dabei, dass ein Normalenvektor der jeweiligen Flächenbereiche in Richtung des Bodens zeigt bzw. eine Ebene des Bodens schneiden würde.

Zur Realisierung einer Neigung in Richtung des Bodens kann die Anzeigefläche insbesondere in der Form der Mantelfläche eines Kegelstumpfs ausgebildet sein.

Gemäß einer weiteren vorteilhaften Ausführungsform sind verschiedene Flächenbereiche unterschiedlich stark in Richtung des Bodens geneigt. Hierdurch wird es beispielsweise ermöglicht, auf einer Gehsteigseite der Anzeigeeinheit die Anzeigefläche stärker in Richtung des Bodens zu neigen. Da von Fußgängern die Informationen üblicherweise aus kleinerer Entfernung abgelesen werden, erleichtert hier die stärkere Neigung das Ablesen der dargestellten Informationen. Bevorzugt können in den Flächenbereichen mit stärkerer Neigung andere Informationen dargestellt werden, als in Flächenbereichen mit geringerer Neigung. Beispielsweise können in den stärker geneigten Flächenbereichen Informationen über das Wetter, Notrufnummern, Werbung oder ähnliches eingeblendet sein.

Gemäß einer weiteren vorteilhaften Ausführungsform sind das Erfassungssystem und die Anzeigeeinheit an dem gleichen Befestigungselement angebracht und verwenden insbesondere gemeinsam eine Stromversorgung des Befestigungselements. Auf diese Weise kann die Installation des Parkplatzüberwachungssystems stark vereinfacht werden, da die bereits vorhandene Infrastruktur des Befestigungselements mehrfach, das heißt für das Erfassungssystem und die Anzeigeeinheit, verwendet wird.

Das Erfassungssystem kann an einem Punkt des Befestigungselements angeordnet sein, der möglichst hoch über dem Boden liegt, um eine gute Übersicht über die Parkplatzfläche zu erhalten und möglichst große Parkplatzflächen überwachen zu können. Durch die Anbringung des Erfassungssystems und der Anzeigeeinheit an demselben Befestigungselement wird zudem eine Kommunikation zwischen Erfassungssystem und Anzeigeeinheit erleichtert.

Besonders bevorzugt sind das Erfassungssystem und die Anzeigeeinheit ausgebildet, mittels Funk zu kommunizieren. Hierdurch wird die Installation des Parkplatzüberwachungssystems weiter vereinfacht, da keine zusätzlichen Leitungen, z.B. für einen Datenbus, installiert werden müssen. Zur Kommunikation mittels Funk kann die Anzeigeeinheit eine Funkeinrichtung, insbesondere einen Empfänger, umfassen. Ebenfalls kann das Erfassungssystem eine entsprechende Funkeinrichtung aufweisen, die Daten an die Anzeigeeinheit sendet. Zur Funkkommunikation kann beispielsweise WLAN, Bluetooth, ZigBee und dergleichen verwendet werden. Insbesondere kann die Anzeigeeinheit auch ein öffentliches WLAN zur Verfügung stellen, welches von Benutzern der Parkplatzfläche verwendet werden kann.

Alternativ kann die Anzeigeeinheit auch mittels eines Mobilfunknetzes mit dem Erfassungssystem oder mit einem Server des Erfassungssystems kommunizieren.

Alternativ oder zusätzlich zur Kommunikation mittels Funk, können das Erfassungssystem und die Anzeigeeinheit auch Informationen über eine gemeinsame Stromversorgung austauschen. Hierzu kann beispielsweise die sogenannte Powerline Communication (PLC) verwendet werden, bei welcher Informationen mittels mehrerer Trägerfrequenzen auf eine Stromleitung aufmoduliert werden. Eine Datenübertragung mittels PLC kann dann von Vorteil sein, wenn ein oder mehrere Anzeigeeinheiten und/oder ein oder mehrere Erfassungssysteme über eine gemeinsame Stromversorgung verfügen (beispielsweise wenn die Erfassungssysteme und die Anzeigeeinheiten an verschiedenen Masten einer Straßenbeleuchtung eines Straßenzugs angebracht sind). Mittels PLC kann dann eine Reichweite erzielt werden, die die von Funksystemen übersteigen kann.

Gemäß einer weiteren vorteilhaften Ausführungsform sind das Erfassungssystem und die Anzeigeeinheit in einer gemeinsamen Baugruppe angeordnet. Bei der Baugruppe kann es sich um das Gehäuse der Anzeigeeinheit handeln. Hierbei kann das Erfassungssystem z.B. in einer Aussparung in einer Unterseite der Anzeigeeinheit angebracht sein oder durch die Aussparung hindurch die Parkplatzfläche erfassen. Insbesondere kann das Erfassungssystem in einem Master-Segment der Anzeigeeinheit angeordnet sein.

Durch die Zusammenfassung von Erfassungssystem und Anzeigeeinheit kann die Installation des Parkplatzüberwachungssystems noch weiter vereinfacht werden, da lediglich die üblicherweise benötigten Komponenten für die Anzeigeeinheit installiert werden müssen. Zudem kann der Aufwand für die Kommunikation zwischen Anzeigeeinheit und Erfassungssystem deutlich reduziert werden.

Gemäß einer weiteren vorteilhaften Ausführungsform umfasst das Erfassungssystem eine Kamera und ist ausgebildet, freie und belegte Parkplatzbereiche anhand von Einzelbildern der Kamera zu identifizieren. Das Erfassungssystem kann insbesondere Bildverarbeitungsalgorithmen verwenden, um freie und belegte Parkplatzbereiche zu erkennen. Alternativ oder zusätzlich kann das Erfassungssystem auch Funktransponder, Ultraschallsensoren, Radarsensoren und/oder Bodensensoren umfassen, um freie und belegte Parkplatzbereiche zu erkennen.

Bei der Auswertung von Einzelbildern, d.h. Standbildern, wird der Belegungsstatus eines Parkplatzbereiches bevorzugt alleine anhand nur eines Einzelbildes ermittelt.

Gemäß einer weiteren vorteilhaften Ausführungsform umfasst die Anzeigeeinheit zumindest einen Umweltsensor und stellt Messwerte des Umweltsensors dar. Mit dem Umweltsensor kann beispielsweise eine aktuelle Temperatur, eine Feinstaubbelastung, ein aktueller CO₂-Wert, Lärm, ein Verkehrs- oder Fußgängeraufkommen und dergleichen gemessen werden. Von dem Umweltsensor erfasste Daten können direkt und damit lokal von der Anzeigeeinheit angezeigt werden. Hierdurch kann sich ein Mehrwert des Parkplatzüberwachungssystems ergeben, indem die Anzeigeeinheit nicht nur zur Darstellung von freien und belegten Parkplatzbereichen genutzt wird, sondern auch weitergehende Informationen für Benutzer der Parkplatzfläche bereitstellt.

Nachfolgend wird die Erfindung rein beispielhaft unter Bezugnahme auf die Zeichnungen beschrieben. Es zeigen:
- Fig. 1: ein an einem Lampenmasten angebrachtes Parkplatzüberwachungssystem;
- Fig. 2: eine Anzeigeeinheit, welche eine erste Art von Informationen darstellt; und
- Fig. 3: eine Anzeigeeinheit, welche eine zweite Art von Informationen darstellt.

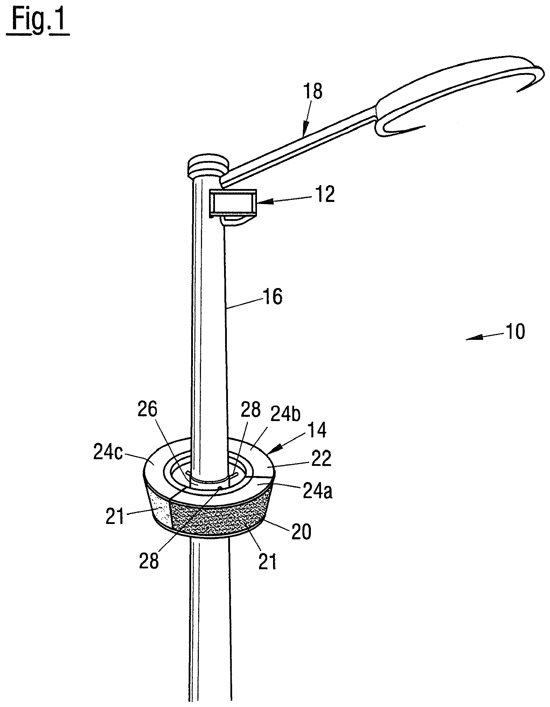

Fig. 1 zeigt ein Parkplatzüberwachungssystem 10, welches ein Erfassungssystem 12 und eine Anzeigeeinheit 14 umfasst. Das Erfassungssystem 12 und die Anzeigeeinheit 14 sind beabstandet zueinander an einem Mast 16 einer Straßenbeleuchtungseinrichtung 18 angebracht, wobei das Erfassungssystem 12 einen größeren Abstand zu dem Boden (nicht dargestellt) aufweist als die Anzeigeeinheit 14.

Das Erfassungssystem 12 umfasst eine (nicht gezeigte) Kamera, die eine die Straßenbeleuchtungseinrichtung 18 umgebende Parkplatzfläche (ebenfalls nicht gezeigt) überwacht und freie und belegte Parkplatzbereiche in der Parkplatzfläche erkennt.

Die Anzeigeeinheit 14 weist eine umlaufende Anzeigefläche 20 auf, die die Form der Mantelfläche eines Kegelstumpfs besitzt. Die Anzeigefläche 20 ist gekrümmt ausgebildet und umfasst eine Vielzahl von (genauer gesagt eine unendlich große Zahl von infinitesimal kleinen) ebenen Flächenbereichen, die aneinander angrenzen, aneinander anschließen und jeweils eine unterschiedliche räumliche Orientierung aufweisen. Die Anzeigefläche 20 umfasst eine Vielzahl von einzeln ansteuerbaren Pixeln, die durch verschiedenfarbige LEDs 21 gebildet werden.

Die Anzeigefläche 20 ist von einer ringscheibenförmigen Oberseite 22 und einer (nicht gezeigten) ebenfalls ringscheibenförmigen Unterseite begrenzt.

Die Anzeigeeinheit 14 umfasst drei Segmente 24a, 24b, 24c, welche sich jeweils über einen Winkelbereich von 120° erstrecken und in ihrem Inneren elektrische Verbindungen zu den jeweils benachbarten Segmenten 24a, 24b, 24c aufweisen.

Die Anzeigeeinheit 14 ist mittels einer größenverstellbaren Schelle 26, welche wiederum mittels Schrauben 28 mit den Segmenten 24a, 24b, 24c verbunden ist, an dem Masten 16 befestigt. Die Schrauben 28 sind in ihrer Länge verstellbar, wodurch die Anzeigeeinheit an Masten 16 mit unterschiedlichem Durchmesser anbringbar ist.

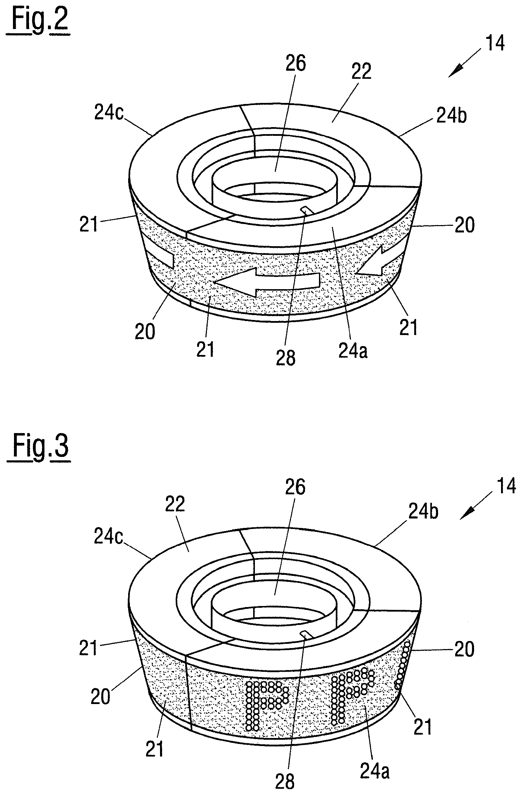

Das Erfassungssystem 12 und die Anzeigeeinheit 14 umfassen jeweils Funkeinrichtungen (nicht gezeigt), um miteinander zu kommunizieren. Anhand der von dem Erfassungssystem 12 empfangenen Daten kann die Anzeigeeinheit 14 auf ihrer Anzeigefläche 20 verschiedene Informationen in unterschiedlichen Bereichen darstellen, wie in Fig. 2 und Fig. 3 gezeigt.

Fig. 2 und Fig. 3 zeigen die Anzeigeeinheit 14 ohne den Masten 16. In Fig. 2 sind auf der Anzeigefläche 20 wandernde Pfeile dargestellt, die einem Fahrer anzeigen, in welcher Richtung sich der nächste freie Parkplatzbereich befindet. Fig. 3 zeigt die Darstellung eines Parkplatzsymbols auf der Anzeigeeinheit 14, sodass kenntlich gemacht wird, dass sich in der Umgebung der Anzeigeeinheit 14 eine Parkplatzfläche befindet.

### Bezugszeichenliste

- 10: Parkplatzüberwachungssystem
- 12: Erfassungssystem
- 14: Anzeigeeinheit
- 16: Mast
- 18: Straßenbeleuchtungseinrichtung
- 20: Anzeigefläche
- 21: LED
- 22: Oberseite
- 24a, 24b, 24c: Segment
- 26: Schelle
- 28: Schraube

## Patentansprüche

1. Parkplatzüberwachungssystem (10) zur Erfassung von freien und belegten Parkplatzbereichen in einer Parkplatzfläche, umfassend
- ein Erfassungssystem (12), welches ausgebildet ist, eine Mehrzahl verschiedener Fahrzeuge auf den Parkplatzbereichen der Parkplatzfläche zu detektieren, und
- zumindest eine Anzeigeeinheit (14) zur Anzeige von mehreren verschiedenen belegten und/oder freien Parkplatzbereichen, wobei die Anzeigeeinheit (14) eine Anzeigefläche (20) zur Darstellung von Informationen aufweist,
wobei die Anzeigefläche (20) zumindest zwei Flächenbereiche umfasst, wobei die Flächenbereiche aneinander angrenzen und/oder aneinander anschließen, jeweils eine unterschiedliche räumliche Orientierung aufweisen und wobei die Anzeigeeinheit (14) ausgebildet ist, in unterschiedlichen Flächenbereichen unterschiedliche Informationen anzuzeigen, insbesondere Hinweise auf unterschiedliche belegte und/oder freie Parkplatzbereiche, und wobei die Anzeigefläche (20) eine Vielzahl einzeln ansteuerbarer Pixel (21) aufweist, wobei sich die Pixel (21) auf die verschiedenen Flächenbereiche verteilen,
**dadurch gekennzeichnet, dass**
die Anzeigefläche (20) zumindest zum Teil zylindermantelförmig und/oder elliptisch und/oder in der Form der Mantelfläche eines Kegelstumpfs geformt ist.

2. Parkplatzüberwachungssystem (10) nach zumindest einem der vorstehenden Ansprüche,
**dadurch gekennzeichnet, dass**
die Anzeigefläche (20) zumindest im Wesentlichen allseitig sichtbar ist.

3. Parkplatzüberwachungssystem (10) nach zumindest einem der vorstehenden Ansprüche,
**dadurch gekennzeichnet, dass**
die Anzeigefläche (20) sich zumindest zum Teil um ein Befestigungselement herum erstreckt, wobei das Befestigungselement bevorzugt ein Mast (16), insbesondere ein Mast (16) einer Straßenbeleuchtungseinrichtung ist.

4. Parkplatzüberwachungssystem (10) nach Anspruch 3,
**dadurch gekennzeichnet, dass**
die Anzeigeeinheit (14) umlaufend einen Abstand zu dem Befestigungselement (16) aufweist.

5. Parkplatzüberwachungssystem (10) nach Anspruch 3 oder 4,
**dadurch gekennzeichnet, dass**
die Anzeigeeinheit (14) mittels einer größenverstellbaren Schelle (26) an dem Befestigungselement (16) angebracht ist, wobei zwischen der Schelle (26) und der Anzeigeeinheit (14) insbesondere längenverstellbare Abstandshalter (28) vorgesehen sind.

6. Parkplatzüberwachungssystem (10) nach einem der Ansprüche 3 bis 5,
**dadurch gekennzeichnet, dass**
das Befestigungselement (16) im Boden verankert ist und sich zumindest bis zu der Anzeigeeinheit (14) im Wesentlichen senkrecht aus dem Boden erstreckt.

7. Parkplatzüberwachungssystem (10) nach zumindest einem der vorstehenden Ansprüche,
**dadurch gekennzeichnet, dass**
die Anzeigeeinheit (14) ringförmig ausgebildet ist und an einer umlaufenden Außenseite die Anzeigefläche (20) umfasst.

8. Parkplatzüberwachungssystem (10) nach zumindest einem der vorstehenden Ansprüche,
**dadurch gekennzeichnet, dass**
die Anzeigeeinheit (14) mehrere zusammenfügbare Segmente (24a, 24b, 24c) umfasst, welche mittels elektrischer Kontakte elektrisch miteinander verbindbar sind.

9. Parkplatzüberwachungssystem (10) nach zumindest einem der vorstehenden Ansprüche,
**dadurch gekennzeichnet, dass**
das Erfassungssystem (12) und die Anzeigeeinheit (14) an dem gleichen Befestigungselement (16) angebracht sind und insbesondere eine Stromversorgung des Befestigungselements (16) verwenden.

10. Parkplatzüberwachungssystem (10) nach zumindest einem der vorstehenden Ansprüche,
**dadurch gekennzeichnet, dass**
das Erfassungssystem (12) und die Anzeigeeinheit (14) ausgebildet sind, mittels Funk zu kommunizieren.

11. Parkplatzüberwachungssystem (10) nach zumindest einem der vorstehenden Ansprüche,
**dadurch gekennzeichnet, dass**
das Erfassungssystem (12) und die Anzeigeeinheit (14) in einer gemeinsamen Baugruppe angeordnet sind.

12. Parkplatzüberwachungssystem (10) nach zumindest einem der vorstehenden Ansprüche,
**dadurch gekennzeichnet, dass**
das Erfassungssystem (12) eine Kamera umfasst und ausgebildet ist, freie und belegte Parkplatzbereiche anhand von Einzelbildern der Kamera zu identifizieren.

13. Parkplatzüberwachungssystem (10) nach zumindest einem der vorstehenden Ansprüche,
**dadurch gekennzeichnet, dass**
die Anzeigeeinheit (14) zumindest einen Umweltsensor umfasst und Messwerte des Umweltsensors darstellt.

## Claims

1. A parking space monitoring system (10) for detecting free and occupied parking bays in a parking space zone, said parking space monitoring system (10) comprising
- a detection system (12) which is configured to detect a plurality of different vehicles in the parking bays of the parking space zone, and
- at least one display unit (14) for displaying a plurality of different occupied and/or free parking bays, wherein the display unit (14) has a display area (20) for displaying information,
wherein the display area (20) comprises at least two areal regions, wherein the areal regions are adjacent to and/or adjoin one another, each have a different spatial orientation and wherein the display unit (14) is configured to display different information in different areal regions, in particular indications of different occupied and/or free parking bays, and wherein the display area (20) has a plurality of individually controllable pixels (21), wherein the pixels (21) are distributed over the different areal regions, **characterized in that**
the display area (20) is at least party shaped in the form of the lateral surface of a cylinder and/or as elliptical and/or in the form of the lateral surface of a truncated cone.

2. A parking space monitoring system (10) according to at least one of the preceding claims,
**characterized in that**
the display area (20) is at least substantially visible at all sides.

3. A parking space monitoring system (10) according to at least one of the preceding claims,
**characterized in that**
the display area (20) at least partly extends around a fastening element, with the fastening element preferably being a pole (16), in particular a pole (16) of a street lighting device.

4. A parking space monitoring system (10) according to claim 3,
**characterized in that**
the display unit (14) peripherally has a distance from the fastening element (16).

5. A parking space monitoring system (10) according to claim 3 or 4,
**characterized in that**
the display unit (14) is attached to the fastening element (16) by means of a size-adjustable clamp (26), with spacers (28), which are in particular adjustable in length, being provided between the clamp (26) and the display unit (14).

6. A parking space monitoring system (10) according to any one of the claims 3 to 5,
**characterized in that**
the fastening element (16) is anchored in the ground and extends substantially perpendicular from the ground at least up to the display unit (14).

7. A parking space monitoring system (10) according to at least one of the preceding claims,
**characterized in that**
the display unit (14) is annular and comprises the display area (20) at a peripheral outer side.

8. A parking space monitoring system (10) according to at least one of the preceding claims,
**characterized in that**
the display unit (14) comprises a plurality of segments (24a, 24b, 24c) which can be joined together and which can be electrically connected to one another by means of electrical contacts.

9. A parking space monitoring system (10) according to at least one of the preceding claims,
**characterized in that**
the detection system (12) and the display unit (14) are attached to the same fastening element (16) and in particular use a power supply of the fastening element (16).

10. A parking space monitoring system (10) according to at least one of the preceding claims,
**characterized in that**
the detection system (12) and the display unit (14) are configured to communicate by radio.

11. A parking space monitoring system (10) according to at least one of the preceding claims,
**characterized in that**
the detection system (12) and the display unit (14) are arranged in a common assembly.

12. A parking space monitoring system (10) according to at least one of the preceding claims,
**characterized in that**
the detection system (12) comprises a camera and is configured to identify free and occupied parking bays based on individual images of the camera.

13. A parking space monitoring system (10) according to at least one of the preceding claims,
**characterized in that**
the display unit (14) comprises at least one environmental sensor and displays measurement values of the environmental sensor.

## Revendications

1. Système de surveillance de parking (10) destiné à détecter des zones de parking libres et occupées dans une aire de stationnement, comportant
- un système de détection (12) conçu pour détecter une pluralité de véhicules différents sur les zones de parking de l'aire de stationnement, et
- au moins une unité d'affichage (14) destinée à afficher plusieurs zones de parking différentes occupées et/ou libres, l'unité d'affichage (14) présentant une surface d'affichage (20) destinée à représenter des informations, dans lequel
la surface d'affichage (20) comprend au moins deux zones de surface, les zones de surface étant adjacentes l'une à l'autre et/ou se raccordant l'une à l'autre, présentant chacune une orientation spatiale différente, et
l'unité d'affichage (14) est conçue pour afficher des informations différentes dans différentes zones de surface, en particulier des indications concernant différentes zones de parking occupées et/ou libres, et
la surface d'affichage (20) présente une pluralité de pixels (21) pouvant être commandés individuellement, les pixels (21) se répartissant sur les différentes zones de surface,
**caractérisé en ce que**
la surface d'affichage (20) est au moins en partie en forme d'enveloppe cylindrique et/ou elliptique et/ou en forme de surface enveloppe d'un cône tronqué.

2. Système de surveillance de parking (10) selon la revendication précédente,
**caractérisé en ce que**
la surface d'affichage (20) est visible au moins sensiblement de tous les côtés.

3. Système de surveillance de parking (10) selon l'une au moins des revendications précédentes,
**caractérisé en ce que**
la surface d'affichage (20) s'étend au moins en partie autour d'un élément de fixation, l'élément de fixation étant de préférence un mât (16), en particulier un mât (16) d'un dispositif d'éclairage routier.

4. Système de surveillance de parking (10) selon la revendication 3,
**caractérisé en ce que**
l'unité d'affichage (14) présente une distance périphérique par rapport à l'élément de fixation (16).

5. Système de surveillance de parking (10) selon la revendication 3 ou 4,
**caractérisé en ce que**
l'unité d'affichage (14) est montée sur l'élément de fixation (16) au moyen d'un collier (26) de taille réglable, des éléments d'espacement (28), en particulier réglables en longueur, étant prévus entre le collier (26) et l'unité d'affichage (14).

6. Système de surveillance de parking (10) selon l'une des revendications 3 à 5,
**caractérisé en ce que**
l'élément de fixation (16) est ancré dans le sol et s'étend sensiblement verticalement hors du sol au moins jusqu'à l'unité d'affichage (14).

7. Système de surveillance de parking (10) selon l'une au moins des revendications précédentes,
**caractérisé en ce que**
l'unité d'affichage (14) est réalisée en forme annulaire et présente la surface d'affichage (20) sur une face extérieure périphérique.

8. Système de surveillance de parking (10) selon l'une au moins des revendications précédentes,
**caractérisé en ce que**
l'unité d'affichage (14) comprend plusieurs segments (24a, 24b, 24c) pouvant être assemblés, qui peuvent être connectés électriquement entre eux au moyen de contacts électriques.

9. Système de surveillance de parking (10) selon l'une au moins des revendications précédentes,
**caractérisé en ce que**
le système de détection (12) et l'unité d'affichage (14) sont montés sur le même élément de fixation (16) et utilisent en particulier une alimentation électrique de l'élément de fixation (16).

10. Système de surveillance de parking (10) selon l'une au moins des revendications précédentes,
**caractérisé en ce que**
le système de détection (12) et l'unité d'affichage (14) sont conçus pour communiquer par radio.

11. Système de surveillance de parking (10) selon l'une au moins des revendications précédentes,
**caractérisé en ce que**
le système de détection (12) et l'unité d'affichage (14) sont disposés dans un ensemble structurel commun.

12. Système de surveillance de parking (10) selon l'une au moins des revendications précédentes,
**caractérisé en ce que**
le système de détection (12) comprend une caméra et est conçu pour identifier les zones de parking libres et occupées à l'aide d'images individuelles prises par la caméra.

13. Système de surveillance de parking (10) selon l'une au moins des revendications précédentes,
**caractérisé en ce que**
l'unité d'affichage (14) comprend au moins un capteur d'environnement et représente des valeurs de mesure du capteur d'environnement.
